# EUROPÄISCHE PATENTSCHRIFT

(11) **EP 2 371 124 B1**
(45) Veröffentlichungstag und Bekanntmachung des Hinweises auf die Patenterteilung: **30.09.2020**
(21) Anmeldenummer: 10752290.6
(22) Anmeldetag: 03.08.2010
(51) Int. Cl.: H04N 5/40, H04N 5/445, H04N 21/2383, H04N 21/242, H04N 21/61

(54) **KODIERVORRICHTUNG, VORRICHTUNG ZUR WEITERVERARBEITUNG EINES DIGITALEN BASISBAND- ODER ZWISCHENFREQUENZSIGNALS, SYSTEM UND VERFAHREN ZUR EXTERNEN DIGITALEN KODIERUNG**
CODING DEVICE, DEVICE FOR REPROCESSING A DIGITAL BASEBAND SIGNAL OR INTERMEDIATE FREQUENCY SIGNAL, SYSTEM AND METHOD FOR EXTERNAL DIGITAL CODING
DISPOSITIF DE CODAGE, DISPOSITIF DE TRAITEMENT ULTÉRIEUR D'UN SIGNAL NUMÉRIQUE DE BANDE DE BASE OU DE FRÉQUENCE INTERMÉDIAIRE, SYSTÈME ET PROCÉDÉ DE CODAGE NUMÉRIQUE EXTERNE

(30) Priorität: 20.08.2009 DE 102009038269; 23.03.2010 DE 102010012428
(43) Veröffentlichungstag der Anmeldung: 05.10.2011
(73) Patentinhaber: Rohde & Schwarz GmbH & Co. KG, 81671 München (DE)
(72) Erfinder: REITMEIER, Manfred, 84036 Landshut (DE); HEINEMANN, Cornelius, 85435 Erding (DE)
(74) Vertreter: Beder, Jens
(86) Internationale Anmeldenummer: PCT/EP2010/004740
(87) Internationale Veröffentlichungsnummer: WO 2011/020558

(56) Entgegenhaltungen:
- DE-A1- 19 948 383
- FR-A1- 2 864 404
- US-A1- 2005 034 156
- US-A1- 2009 055 677
- DVB ORGANIZATION: "En50083_9.pdf" DVB, DIGITAL VIDEO BROADCASTING, C/O EBU - 17A ANCIENNE ROUTE - CH-1218 GRAND SACONNEX, GENEVA - SWITZERLAND, 3. Oktober 2003 (2003-10-03), XP017830709 in der Anmeldung erwähnt
- DVB ORGANIZATION: "En300744.V1.1.1.pdf" DVB, DIGITAL VIDEO BROADCASTING, C/O EBU - 17A ANCIENNE ROUTE - CH-1218 GRAND SACONNEX, GENEVA - SWITZERLAND, 3. Oktober 2003 (2003-10-03), XP017830695

## Beschreibung

Die Erfindung betrifft eine Kodiervorrichtung zur Umwandlung eines digitalen Datenstroms, eine Vorrichtung zur Weiterverarbeitung eines digitalen Basisbandsignals oder eines digitalen Zwischenfrequenzsignal, ein System aus besagter Kodiervorrichtung und Vorrichtung und ein Verfahren zur externen digitalen Kodierung eines digitalen Datenstroms.

Im digitalen Rundfunk werden regionale und/oder internationale Standards zur Übertragung von kontinuierlichen digitalen Datenströmen wie Musik- oder Videodaten definiert. So wurde zum Beispiel in Europa DVB ("Digital Video Broadcasting") als Standard für das digitale Fernsehen und DAB ("Digital Audio Broadcasting") als Standard für digitalen Hörfunk festgelegt. Aufgrund dieser Festlegung spiegelt ein Rundfunkstandard nicht den neuesten Stand der digitalen Übertragungstechnik wieder. Deshalb werden die digitalen Rundfunkstandards durch neue Rundfunkstandards ersetzt, die wiederum an die neuen Standards angepasste Rundfunksendegeräte erfordern.

In Rundfunksystemen des terrestrischen digitalen Videorundfunkstandards DVB-T wird ein Videodatenstrom über eine asynchrone serielle Schnittstelle ("Asynchronous Serial Interface", ASI) an einen Steuersender ("exciter") übergeben, der den Videodatenstrom in ein Rundfunksignal nach dem DVB-T Standard überführt und das Rundfunksignal an einen Verstärker gibt. Der Verstärker sendet das verstärkte Rundfunksignal mittels einer Rundfunkantenne aus.

DE 199 48 383 A1 offenbart, die Nutzdatenkonstellation eines Mehrträgersignals auf der Empfangsseite zu ermitteln. Das Signal ist im 2K-Modus nach DVB-T-Standard QAM-moduliert und mit einem zentralen Träger versehen, der sich in der Mitte der einzelnen Träger befindet und vorübergehend mit Benutzerdaten moduliert ist und vorübergehend einen verteilten Piloten darstellt. Die Auftrittshäufigkeit aller I / Q-Werte, die sich auf den Teil der Benutzerdaten beziehen, der zu dem zentralen Träger gehört, wird ermittelt und dann die Mitte der Benutzerdaten-Konstellation bestimmt. In der DE 199 48 383 A1 wird ein grundsätzlicher Aufbau einer Sender-Empfängerstrecke eines nach dem DBV-T-Standard arbeitenden Digital Video-Broadcasting Systems (DVB) gezeigt. Senderseitig werden die zu übertragenden Videosignale in einer Datenaufbereitungsstufe im Frequenzbereich aufbereitet und anschließend mit einer inversen FourierTransformation (IFFT) in den Zeitbereich umgerechnet. Die so erzeugten I- und Q-Anteile werden nach Digitalisierung in D/A-Wandlern verstärkt, mit einem Trägersignal auf die gewünschte Ausgangsfrequenz gemischt, zusammengefasst und schließlich gesendet.

Wird nun ein neuer Rundfunkstandard wie z. B. DVB-T2 verwendet, so müsste der Steuersender an den neuen Rundfunkstandard angepasst werden, um beispielsweise höheren Datenmengen gerecht zu werden. Die bisher eingesetzten Steuersender sind nicht für diese höheren Anforderungen des DVB-T2 Standards ausgelegt, so dass eine einfache Umprogrammierung des Steuersenders nicht genügt.

Die Aufgabe der Erfindung ist es, die Probleme des Stands der Technik zu lösen und eine einfache und kostengünstige Alternative zum Ersetzen des vollständigen Steuersenders zu finden.Die Aufgabe ist durch die Kodiervorrichtung nach Anspruch 1 gemäß einem ersten Aspekt gelöst. Die erfindungsgemäße Kodiervorrichtung ist zur Umwandlung eines digitalen Datenstroms in ein digitales Basisbandsignal im Zeitbereich oder in ein digitales Zwischenfrequenzsignal im Zeitbereich geeignet. Die Kodiervorrichtung weist eine asynchrone serielle Schnittstelle zum Ausgeben dieses in der Kodiervorrichtung erzeugten digitalen Basisbandsignals oder Zwischenfrequenzsignals auf. Erfindungsgemäß ist die asynchrone serielle Schnittstelle eine Schnittstelle entsprechend der europäischen Norm EN-500083-9.

Die Aufgabe ist weiterhin durch eine erfindungsgemäße Vorrichtung nach einem zweiten Aspekt der Erfindung gelöst. Die erfindungsgemäße Vorrichtung ist zur Weiterverarbeitung eines digitalen Basisbandsignals im Zeitbereich oder eines digitalen Zwischenfrequenzsignals im Zeitbereich geeignet. Die erfindungsgemäße Vorrichtung weist eine asynchrone serielle Schnittstelle zum Einlesen des digitalen Basisbandsignals oder Zwischenfrequenzsignals auf. Erfindungsgemäß ist die asynchrone serielle Schnittstelle eine Schnittstelle entsprechend der europäischen Norm EN-500083-9.

Die Erfindung ist weiterhin durch ein erfindungsgemäßes System nach einem dritten Aspekt der Erfindung gelöst. Das System weist eine zuvor beschriebene erfindungsgemäße Kodiervorrichtung und eine zuvor beschriebene erfindungsgemäße Vorrichtung auf. Die asynchrone serielle Schnittstelle der Kodiervorrichtung und die asynchrone serielle Schnittstelle der Vorrichtung sind miteinander verbunden. Erfindungsgemäß sind die asynchrone serielle Schnittstelle der Kodiervorrichtung und die asynchrone serielle Schnittstelle der Vorrichtung Schnittstellen entsprechend der europäischen Norm EN-500083-9.

Die Aufgabe ist durch das erfindungsgemäße Verfahren zum externen digitalen Kodieren eines Basisbandsignals oder Zwischenfrequenzsignals nach einem vierten Aspekt der Erfindung gelöst. Das erfindungsgemäße Verfahren weist die folgenden Schritte auf: Ein digitaler Datenstrom wird in einer Kodiervorrichtung in ein digitales Basisbandsignal im Zeitbereich oder in ein digitales Zwischenfrequenzsignal im Zeitbereich umgewandelt. Daraufhin wird das digitale Basisband- oder Zwischenfrequenzsignal über eine asynchrone serielle Schnittstelle der Kodiervorrichtung ausgegeben. Das ausgegebene digitale Basisbandsignal wird mittels eines Übertragungsmittels wie zum Beispiel ein Kabel an eine asynchrone serielle Schnittstelle einer Vorrichtung gegeben und dort von der Vorrichtung eingelesen. Die Vorrichtung verarbeitet das eingelesene digitale Basisbandsignals oder Zwischenfrequenzsignal weiter. Das erfindungsgemäße Verfahren ist dadurch ausgezeichnet, dass die asynchrone serielle Schnittstelle eine Schnittstelle entsprechend der europäischen Norm EN-500083-9 ist.

Durch die externe Kodierung, d. h. eine Kodierung außerhalb des Steuersenders eines digitalen Basisbandsignals oder eines digitalen Zwischenfrequenzsignals im Zeitbereich in einem externen Gerät und die Übermittlung dieses dort erzeugten Signals mittels der existierenden ASI-Schnittstelle des Steuersenders kann ein Austauschen des nach Änderung eines zu erfüllenden Übertragungsstandards des Steuersenders vermieden werden. Der Steuersender benötigt dann nur eine Softwareaktualisierung, die die Anweisungen zum Auslesen des digitalen Basisbandsignals oder des digitalen Zwischenfrequenzsignals aus dem übermittelten Signal der ASI-Schnittstelle ermittelt und die Kodierung nach dem alten Standard überbrückt. Durch das Erstellen eines digitalen Signals im Zeitbereich, kann das Basisbandsignal oder Zwischenfrequenzsignal über die digitale ASI-Schnittstelle übermittelt werden.

Die Unteransprüche betreffen vorteilhafte Weiterführungen der Erfindung.

Die Kodiervorrichtung weist in vorteilhafter Weise eine Ausgabevorrichtung zur Verbindung bzw. verbunden mit der oder Zwischenfrequenzsignals in das Übertragungsformat der ASI-Schnittstelle geeignet, so dass der Steuersender das extern kodierte digitale Basisbandsignal über die vorhandene ASI-Schnittstelle empfangen kann, da an dem Steuersender kein Eingang für digitale Basisband- oder ZF-Signale vorgesehen ist. Entsprechend weist die erfindungsgemäße Vorrichtung eine Einlesevorrichtung verbunden mit der asynchronen seriellen Schnittstelle der Vorrichtung auf. Die Einlesevorrichtung ist zum Einlesen des digitalen Basisbandsignals oder des digitalen Zwischenfrequenzsignals aus einem in dem Übertragungsformat der asynchronen seriellen Schnittstelle vorliegenden Signal geeignet. Durch eine solche Anpassung des Steuersenders als erfindungsgemäße Vorrichtung kann der Steuersender das extern kodierte digitale Basisbandsignal oder Zwischenfrequenzsignal einlesen und kann das eingelesene digitale Signal weiterverarbeiten. Die für die weitere Verarbeitung erforderliche Anpassung wird vorzugsweise durch eine Softwareaktualisierung realisiert.

Es ist besonders vorteilhaft, die Daten jedes Testpunkts des digitalen Basisbandsignals oder Zwischenfrequenzsignals in der Ausgabevorrichtung der Kodiervorrichtung auf die Übertragungsblöcke des Übertragungsformats der ASI-Schnittstelle aufzuteilen und das Aufteilungsmuster mit dem umgewandelten digitalen Basisbandsignal oder Zwischenfrequenzsignal auszugeben, wenn die Datengröße eines Testpunkts größer als die Datengröße des Übertragungsblocks ist. Entsprechend wird in diesem Fall jeder Testpunkt des digitalen Basisbandsignals oder Zwischenfrequenzsignals in der Einlesevorrichtung der Vorrichtung aus den Übertragungsblöcken auf der Basis eines mit dem digitalen Basisbandsignal oder Zwischenfrequenzsignal eingelesenen Aufteilungsmusters ermittelt. Das Aufteilungsmuster gibt dabei die notwendigen Informationen um einen Testpunkt aus einer Mehrzahl von Übertragungsblöcken zu rekonstruieren, insbesondere die Ordnung und Reihenfolge der in der Mehrzahl von Übertragungsblöcken enthaltenen Informationen des Testpunkts. Dies hat den Vorteil, dass die Datengröße eines Testpunktes und damit die Auflösung des digitalen Basisbandsignals oder Zwischenfrequenzsignals im Zeitbereich nicht durch die Größe oder Länge eines Übertragungsblocks beschränkt ist.

Es ist besonders vorteilhaft, dass die Kodiervorrichtung eine Synchronisierungseinheit zur Erzeugung eines Taktsignals verbunden mit der Ausgabevorrichtung und/oder einer Synchronisierungsschnittstelle zur Ausgabe des Taktsignals aufweist. Weiterhin weist die Vorrichtung ebenfalls eine Synchronisierungsschnittstelle zum Einlesen eines Taktsignals verbunden mit der Einlesevorrichtung auf. Durch eine Verbindung der beiden Synchronisierungsschnittstellen kann die Einlesevorrichtung mit der Ausgabevorrichtung synchronisiert werden und parallele Ausgabesignale über weitere ASI-Schnittstellen der Kodiervorrichtung oder parallele Einlesesignale weiterer ASI-Schnittstellen der Einlesevorrichtung auf das Taktsignal synchronisiert werden. Gleichzeitig kann dieses Taktsignal weiter in der Vorrichtung zur Synchronisierung eines Gleichwellennetzes auf das Taktsignal der Kodiervorrichtung genutzt werden.

Es ist weiterhin Vorteilhaft, dass die Kodiervorrichtung wenigstens eine weitere ASI-Schnittstelle aufweist, und dass ein erster Anteil des digitalen Basisbandsignals als erstes digitales Signal und ein zweiter Anteil des digitalen Basisbandsignals als zweites digitales Signal über verschiedene ASI-Schnittstellen ausgegeben werden. Weitere Anteile können entsprechend über weitere ASI-Schnittstellen übertragen werden. Es ist ebenfalls von Vorteil, dass die Vorrichtung eine weitere asynchrone serielle Schnittstelle aufweist, das erste digitale Signal und das zweite digitale Signal über verschiedene asynchrone serielle Schnittstellen eingelesen werden. Durch zwei ASI-Schnittstellen lässt sich die maximale Übertragungsrate zwischen der Kodiervorrichtung und der Vorrichtung verdoppeln. Der erste und der zweite Anteil des digitalen Basisband- oder Zwischenfrequenzsignals sind vorzugsweise der Realteil und der Imaginärteil der inversen Fouriertransformation des Basisband- oder Zwischenfrequenzsignals im Frequenzraum, d.h. der über die orthogonalen Frequenzen des Frequenzbands verteilten Punkte im Inphase-Quadratur-Raum. Die separate Übertragung des ersten und zweiten Anteils des Basisband- oder Zwischenfrequenzsignals ist besonders vorteilhaft, da so auf der Vorrichtungsseite keine weiteren Angaben zum Zusammenführen des ersten und zweiten Anteils des Basisbandsignals nötig sind. Dadurch wird die verdoppelte maximale Übertragungsrate nicht durch zusätzliche Informationen zum Zusammenführen der parallel übertragenen Basisband- oder Zwischenfrequenzsignalteile geschmälert.

Es ist weiterhin von Vorteil, dass die Vorrichtung einen Digital/Analog-Wandler aufweist, der das digitale Basisbandsignal in ein analoges Basisbandsignal oder das digitale Zwischenfrequenzsignal in ein analoges Zwischenfrequenzsignal umwandelt.

Es ist weiterhin vorteilhaft, dass die Vorrichtung eine Sendevorrichtung zum Senden des auf eine Trägerfrequenz gemischten analogen Basisbandsignals oder zum Senden des auf eine Trägerfrequenz gemischten analogen Zwischenfrequenzsignals aufweist.

Es ist weiterhin von Vorteil, dass die Kodiervorrichtung eine asynchrone serielle Eingangsschnittstelle zum Einlesen des digitalen Datenstroms aufweist, wobei die asynchrone serielle Eingangsschnittstelle mit der asynchronen seriellen Schnittstelle der Kodiervorrichtung direkt verbindbar ist. Weiterhin ist es vorteilhaft, dass die Vorrichtung eine Kodiereinheit zur Umwandlung eines digitalen Datenstroms in ein digitales Basisbandsignal im Zeitbereich oder in ein digitales Zwischenfrequenzsignal im Zeitbereich aufweist, wobei die Kodiereinheit zwischen die asynchrone serielle Schnittstelle und den Digital/Analog Wandler schaltbar ist. So kann das System zusätzlich eine einfach realisierte und kostengünstige Abwärtskompatibilität zu einem älteren Rundfunkstandard vorweisen.

Im Folgenden wird ein bevorzugtes Ausführungsbeispiel der Erfindung anhand der Zeichnung beschrieben. Die Zeichnung zeigt:
- Fig. 1: ein erstes Ausführungsbeispiel des erfindungsgemäßen Systems;
- Fig. 2: ein zweites Ausführungsbeispiel des erfindungsgemäßen Systems; und
- Fig. 3: ein Flussdiagramm der erfindungsgemäßen Verfahrensschritte.

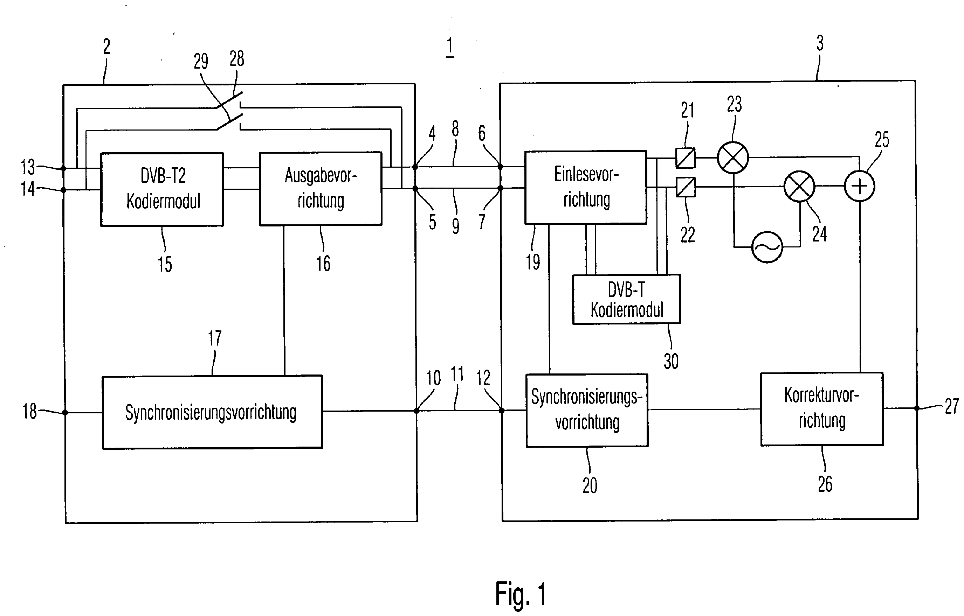

Fig. 1 zeigt ein erstes Ausführungsbeispiel des erfindungsgemäßen Systems. Das System 1 weist eine Kodiervorrichtung 2 auf und einen Steuersender 3 als Vorrichtung zur Weiterverarbeitung eines digitalen Basisbandsignals im Zeitbereich oder eines digitalen Zwischenfrequenzsignals im Zeitbereich. Der Kürze halber wird nachfolgend nur noch das Basisbandsignal stellvertretend genannt. Die Kodiervorrichtung 2 weist zwei ASI-Ausgangsschnittstellen 4 und 5 gemäß der europäischen Norm EN-50083-9 auf. Der Steuersender 3 weist zwei korrespondierende ASI-Schnittstellen 6 und 7 der europäischen Norm EN-50083-9 auf. Die erste ASI-Ausgangschnittstelle 4 der Kodiervorrichtung 2 ist mit der ersten ASI-Schnittstelle 6 des Steuersenders 3 über eine erste Verbindungsleitung 8 verbunden. Die zweite ASI-Ausgangsschnittstelle 5 der Kodiervorrichtung 2 ist mit der zweiten ASI-Schnittstelle 7 des Steuersenders 3 über eine zweite Verbindungsleitung 9 verbunden. Im Falle einer optischen ASI-Schnittstelle sind die Verbindungsleitungen 8 und 9 Glasfaserkabel.

Die Kodiervorrichtung 2 weist weiterhin zwei ASI-Eingangsschnittstellen 13 und 14 der europäischen Norm EN-50083-9 auf, die mit einem Kodiermodul 15 verbunden sind. Über die ASI-Eingangsschnittstellen 13 und 14 empfängt das Kodiermodul 15 einen MPEG-2 ("Moving Picture Experts Group-2") Transportstrom ("Transport stream", TS)oder mehrere MPEG-2 Transportströme. Ein MPEG-2 Transportstrom besteht aus einem oder mehreren MPEG-2 Programmströmen (MPEG-2 PS), die jeweils den kontinuierlichen Videostrom und die dazugehörigen weiteren Daten eines Fernsehprogramms enthalten. Dieser MPEG-2 Transportstrom wird entsprechend der europäischen Norm EN-50083-9 seriell in 8 Bit große Blöcke aufgeteilt und mit angehängter Fehlerkorrektur als 10 Bit große Datenblöcke übertragen. An den ASI-Eingangsschnittstellen 13 und 14 werden die seriell verschickten Datenblöcke wieder in einen synchronisierten und kontinuierlichen MPEG-2 Transportstrom bzw. wieder in parallele synchronisierte und kontinuierliche MPEG-2 Transportströme umgewandelt. Der MPEG-2 Transportstrom kann über die ASI-Schnittstellen der EN-50083-9 sowohl optisch als elektrisch übertragen werden.

Das Kodiermodul 15 empfängt den MPEG-2 Transportstrom und wandelt diesen oder diese in ein digitales Basisbandsignal im Zeitbereich entsprechend des DVB-T2 Standards um. Ein digitales Signal im Zeitbereich, auch als digitales Zeitsignal bezeichnet, zeichnet sich durch eine zeitliche Folge von diskreten Datenpunkten aus. Dieses digitale Basisbandsignal wird an eine mit dem Kodiermodul 15 verbundene Ausgabevorrichtung 16 gegeben. An dieser Stelle soll noch einmal darauf hingewiesen werden, dass das Basisbandsignal lediglich ein im DVB-Betrieb verwendeter Signaltyp ist. Hier könnte auch ein digitales Zwischenfrequenzsignal im Zeitbereich übertragen werden.

Das Kodiermodul 15 moduliert die Daten des MPEG-2 TS mittels Quadraturamplitudenmodulationen, wie QPSK, 16QAM, 32QAM, 64QAM, 256QAM, auf Punkte oder Konstellationen in dem Inphase (I) - Quadratur (Q) - Diagramm, die auch als Codewörter bezeichnet werden. Die Konstellationen werden über die Zeit und die verfügbaren orthogonalen Frequenzen des Basisbands aufgeteilt. Im DVB-T2 Standard kann das Basisband eine Bandbreite von 1,7 MHz, 5 MHz, 6 MHz, 7 MHz, 8 MHz und 10 MHz haben. Das Kodiermodul 15 fügt dem Signal in verschiedenen Kodierstadien verschiedene Fehlerkorrekturmechanismen ("Forward Error Correction", FEC) hinzu und führt verschiedene Verschränkungsprozesse ("Interleaving") wie Bit-, Zell-, Zeit- und Frequenzverschränkung aus. Die zeitgleich auf den orthogonalen Trägerfrequenzen übertragenen Konstellationen werden durch eine inverse Fouriertransformation, zum Beispiel eine inverse schnelle Fouriertransformation (IFFT), digital in den Zeitraum überführt. Die so berechneten Testpunkte des Zeitsignals werden mit einer Genauigkeit von 14 Bit aufgelöst. Nach der inversen Fouriertransformation liegt das digitale Basisbandsignal im Zeitraum vor. Das Basisbandsignal wird in dem DVB-T2 Standard noch durch eine Verkleinerung des Spitzen-zu-Durchschnitts-Verhältnisses ("Peak to Average Power Ratio", PAPR), durch Einfügen von redundanten Teilen des Basisbandsignals wiederholenden Überwachungsintervallen ("Guard Intervall") und durch das Einfügen einer Präampel (P1) ergänzt. Diese digital ausgeführten Schritte zur Weiterverarbeitung des digitalen Basisbands werden in dem ersten Ausführungsbeispiel bevorzugt ebenfalls in dem Kodiermodul 15 ausgeführt. Alternativ können diese Schritte auch in dem Steuersender 3 nach dem Auslesen des digitalen Basisbandsignals ausgeführt werden.

Das digitale Basisbandsignal im Zeitbereich ist die inverse Fouriertransformation einer Frequenz im Basisband zugeordneten Konstellation im I-Q-Diagramm oder die inverse Fouriertransformation mehrerer verschiedener Frequenzen im Basisband eindeutig zugeordneter Konstellationen im I-Q-Diagramm. Das Basisbandsignal ist ein digitales Zeitsignal bestehend aus zeitlich aufeinanderfolgenden, diskreten Testpunkten. Da ein Basisband nur reell gesendet werden kann, wird ein Realteil und ein Imaginärteil der inversen Fouriertransformation als orthogonale um 90° phasenverschobenen überlagerte reelle Signalkomponenten gesendet. Die Phasenverschiebung um 90° kann durch das Mischen des Realteils mit dem Sinus einer Zwischenfrequenz, d.h. mit einem Oszillator der auf der Zwischenfrequenz schwingt, und durch das Mischen des Imaginärteils mit dem Cosinus einer Zwischenfrequenz, d.h. mit dem um 90° phasenverschobenen Oszillator. Deshalb soll im Folgenden der Imaginärteil der inversen Fouriertransformation die Sinuskomponente des Basisbandsignals und der Realteil als Cosinuskomponente des Basisbandsignals bezeichnet werden. Die Sinus- und Cosinuskomponente werden manchmal auch als I und Q Komponente des Basisbandsignals bezeichnet. In dem ersten Ausführungsbeispiel wird die Cosinuskomponente ohne die Phasenverschiebung um 90° an die Ausgabevorrichtung 16 gegeben. Dabei ist es für die Erfindung nicht wichtig, ob die Cosinuskomponente bereits um 90° phasenverschoben zu der Sinuskomponente übertragen wird oder ob die Phasenverschiebung erst in dem Steuersender 3 vollzogen wird.

Das Kodiermodul 15 gibt nun die digitale Sinuskomponente und die digitale Cosinuskomponente des digitalen Basisbandsignals parallel und synchron, aber noch nicht überlagert, an die Ausgabevorrichtung 16 aus. Die Ausgabevorrichtung 16 übersetzt die Sinuskomponente des digitalen Basisbandsignals in ein Übermittlungssignal nach dem Übermittlungsstandard der ersten ASI-Ausgangsschnittstelle 4 nach der europäischen Norm der ASI-Ausgangsschnittstelle 4. Anstatt eines MPEG-2 Transportstroms, für den die erste ASI-Ausgangsschnittstelle 4 eigentlich vorgesehen ist, wird nun die digitale Sinuskomponente in die 8 Bit großen Nutzdatenblöcke des Übermittlungssignals aufgeteilt. Da ein Testpunkt eine Größe von 14 Bit aufweist, wird jeder Testpunkt in einen ersten Teil von 7 Bit und einen zweiten Teil von 7 Bit aufgeteilt und in jeweils einen 8 Bit Block geschrieben. In dem noch nicht belegten Bit, zum Beispiel das erste oder letzte, wird gekennzeichnet, ob es sich um den ersten oder zweiten Teil des Testpunkts handelt. Alternativ könnte der erste Teil auch aus 8 Bit und der zweite Teil aus 6 Bit bestehen. Die 8 Bit Nutzdatenblöcke werden durch die Ergänzung von Steuerinformationen und von Fehlerkorrekturmechanismen auf 10 Bit große Übertragungsblöcke erweitert. Die Übertragungsblöcke werden seriell entsprechend der Norm der ersten ASI-Ausgangsschnittstelle 4 ausgegeben.

Die Cosinuskomponente des digitalen Basisbandsignals wird über die zweite ASI-Ausgangsschnittstelle 5 genau wie die Sinuskomponente in 8 Bit / 10 Bit Datenblöcken seriell an den Steuersender 3 ausgegeben. Jeder Testpunkt der Cosinuskomponente hat genau einen zugehörigen Testpunkt der Sinuskomponente, die synchron übertragen werden müssen, um sowohl die Zugehörigkeit zu bewahren und den Datenfluss nicht zu stören. Deshalb wird ein Übertragungsblock mit einem ersten Teil eines Testpunkts der Sinuskomponente gleichzeitig dem Übertragungsblock übertragen, der den ersten Teil des zu dem Testpunkt der Sinuskomponente gehörenden Testpunkts der Cosinuskomponente aufweist.

Dazu ist die Ausgabevorrichtung 16 mit einer Synchronisationsvorrichtung 17 verbunden, die ein Taktsignal an die Ausgabevorrichtung 16 gibt. Die Synchronisationsvorrichtung 17 gibt dieses Taktsignal auch an eine Synchronisationsschnittstelle 10, die über eine Leitung 11 mit einer Synchronisierungsschnittstelle 12 des Steuersenders 3 verbunden ist. Die Synchronisierungsschnittstelle 12 ist über eine Eingangsschnittstelle 18 mit einem in Fig. 1 nicht gezeigten Gerät des globalen Positionierungssystems (GPS) verbunden. Aus dem Signal des GPS-Geräts berechnet die Synchronisierungsvorrichtung 17 das Taktsignal.

Der Steuersender 3 weist eine Einlesevorrichtung 19 auf, die mit den ASI-Eingangsschnittstellen 6 und 7 verbunden ist. Die Einlesevorrichtung 19 liest aus den eingelesenen Übertragungsblöcken den ersten und den zweiten Teil eines jeden Testpunkts aus und fügt diese zusammen. Die Testpunkte, die über die erste ASI-Eingangsschnittstelle 6 eingelesen werden, werden zu der Sinuskomponente des digitalen Basisbandsignals zusammengefügt und die Testpunkte, die über die zweite ASI-Eingangsschnittstelle 7 eingelesen werden, werden zu der Cosinuskomponente des digitalen Basisbandsignals zusammengefügt. Die zusammengehörenden Übertragungsblöcke des ersten oder zweiten Teils zusammengehörender Testpunkte werden synchron in der Einlesevorrichtung 19 eingelesen. Die Synchronität wird durch das von der Kodiervorrichtung 2 ausgegebene und über die Synchronisationsschnittstelle 12 und eine Synchronisationsvorrichtung 20 an die Einlesevorrichtung 19 gegebene Taktsignal geprüft und eventuell wiederhergestellt.

Die Sinus- und Cosinuskomponente des digitalen Basisbandsignals werden synchron an jeweils einen Digital/AnalogWandler 21 und 22 ausgegeben. Der erste Digital/Analog Wandler 21 wandelt die digitale Sinuskomponente des Basisbandsignals in eine analoge Sinuskomponente des Basisbandsignals. Entsprechend wandelt der zweite Digital/Analog Wandler 22 die digitale Cosinuskomponente des Basisbandsignals in eine analoge Cosinuskomponente des Basisbandsignals. Die analoge Sinus- und Cosinuskomponente des Basisbandsignals wird über die Mischer 23 und 24 auf eine Zwischenfrequenz gemischt. Die Oszillatorschwingungen der beiden Mischer 23 und 24 weisen die gleiche Frequenz auf, sind aber um 90° phasenverschoben. Die auf die Zwischenfrequenz gemischte analoge Cosinuskomponente und die auf die Zwischenfrequenz gemischte analoge Sinuskomponente des Basisbandsignals werden an dem Addierer 25 mit 90° Phasenverschiebung aus den Mischern 23 und 24 zu dem analogen Zwischenfrequenzsignal überlagert. In der Korrekturvorrichtung 26 wird das analoge Zwischenfrequenzsignal weiteren Korrekturschritten unterzogen und auf die Rundfunkfrequenz als Trägerfrequenz zu dem Rundfunksignal hochgemischt. Das Rundfunksignal wird über die Ausgabeschnittstelle 27 an einen in Fig. 1 nicht gezeigten Verstärker gegeben und verstärkt über eine in Fig. 1 nicht gezeigte Antenne ausgesendet.

In einem alternativen Ausführungsbeispiel können die digitale Sinuskomponente und die digitale Cosinuskomponente um 90° phasenverschoben in dem Kodiermodul der Kodiervorrichtung 2 bereits zu dem digitalen Basisbandsignal digital überlagert werden. Allerdings muss bei der Verwendung von zwei ASI-Ausgangsschnittstellen 4 und 5 zur Übermittlung des digitalen Basisbandsignals das Muster, mit dem das digitale Basisbandsignal auf die beiden ASI-Ausgangsschnittstellen 4 und 5 verteilt wird, mit übertragen werden, um in der Eingabevorrichtung 19 das digitale Basisbandsignal aus den beiden ASI-Eingangsschnittstellen wieder herauszulesen und zu einem kontinuierlichen und synchronisierten digitalen Basisbandsignal zu formen. Folglich muss das digitale Basisbandsignal nur noch in einem Digital/Analog-Wandler in ein analoges Basisbandsignal gewandelt werden. Das analoge Basisbandsignal wird daraufhin in einem Mischer auf die Zwischenfrequenz gemischt und an die Korrekturvorrichtung 26 gegeben.

Durch die externe Kodierung des MPEG-2 Transportstroms in der Kodiervorrichtung 2 in ein digitales Basisbandsignal nach dem DVB-T2 Standard und durch die Übermittlung des digitalen Basisbandsignals im Zeitbereich über die ASI-Schnittstelle an den Steuersender 3 und durch die entsprechende Anpassung des Steuersenders 3 zum Einlesen des digitalen Basisbandsignals aus dem übermittelten Signal, das in dem Format der ASI-Schnittstelle vorliegt, muss der Steuersender 3 nicht mehr vollständig ersetzt werden, obwohl er ursprünglich keinen Eingang für das Basisbandsignal aufweist. Der Steuersender 3 muss nur noch durch ein Software-Update auf das Einlesen des digitalen Basisbandsignals und das Überspringen der DVB-T Kodierung angepasst werden.

Zusätzlich lässt sich durch diese Erfindung auch eine Abwärtskompatibilität für den DVB-T Standard realisieren. Dazu muss die Kodiervorrichtung 2 nur die beiden ASI-Eingangsschnittstellen 13 und 14 mit den beiden ASI-Ausgangsschnittstellen 4 und 5 kurzschließen und die DVB-T2 Kodierung unterbrechen. Dazu sind die ASI-Ein- und Ausgangsschnittstellen 13, 14 und 4, 5 jeweils über den Schalter 28 und 29 direkt verbindbar. In dem Steuersender 3 kann die Einlesevorrichtung 19 in diesem Fall die eingelesenen MPEG-2 Transportströme direkt in das DVB-T Kodiermodul 30 geben, welche das digitale Basisbandsignal an den Digital/Analog-Wandler oder die digitale Sinus- und Cosinuskomponente des Basisbandsignals an die Digital/Analog-Wandler 21 und 22 gibt.

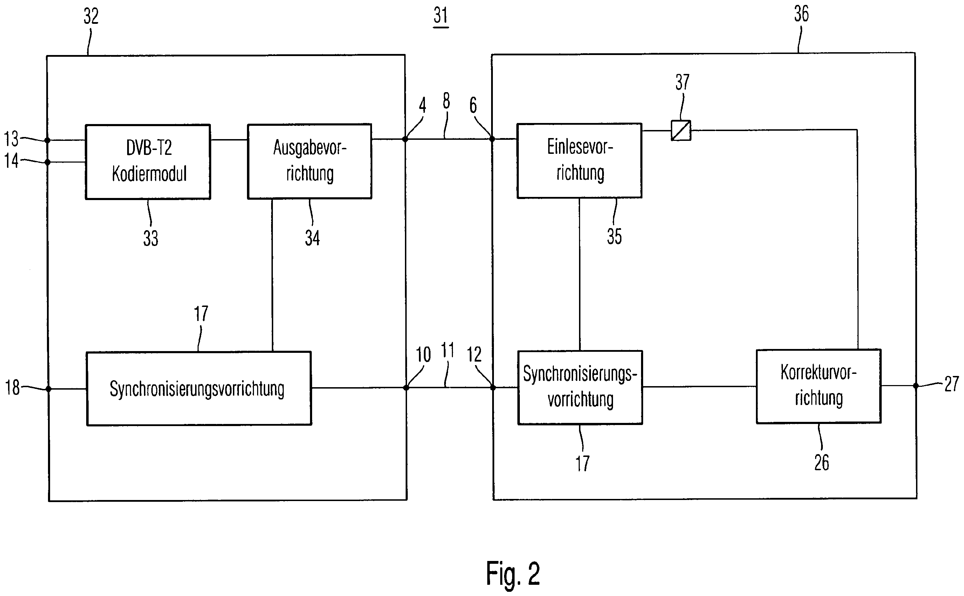

Fig. 2 zeigt ein zweites Ausführungsbeispiel der Erfindung. Das System 31 ist im Wesentlichen gleich wie das System 1 aufgebaut. Gleiche Vorrichtungen werden deshalb mit den gleichen Referenzzeichen bezeichnet und werden nicht mehr beschrieben. Wie in dem ersten Ausführungsbeispiel des Systems 1 wird in dem Kodiermodul 33 der Kodiervorrichtung 32 ein digitales Basisbandsignal erzeugt. Zusätzlich wird die Sinuskomponente und die Cosinuskomponente digital um 90° phasenverschoben zu dem digitalen Basisband überlagert und das digitale Basisbandsignal digital auf eine Zwischenfrequenz gemischt. Das digitale Zwischenfrequenzsignal im Zeitbereich wird an die Ausgabevorrichtung 34 gegeben, wo es in ein Übermittlungssignal nach dem Übermittlungsformat der ASI-Ausgangsschnittstelle 4 über das die Verbindungsleitung 8 und die ASI-Eingangsschnittstelle 6 an eine Einlesevorrichtung 35 eines Steuersenders 36. Die Einlesevorrichtung 35 entspricht weitestgehend der Einlesevorrichtung 19, wobei sie anstatt einer digitalen Sinuskomponente des Basisbandsignals direkt das digitale Zwischenfrequenzsignal aus dem Übermittlungssignal ermittelt. Durch die Überlagerung der Sinus- und der Cosinuskomponente in dem Kodiermodul 33 und durch das Hochmischen des digitalen Basisbandbandsignals auf die Zwischenfrequenz kann mit einer ASI-Schnittstelle die gleiche Datenrate wie in dem ersten Ausführungsbeispiel erzielt werden. Alternativ, je nach erforderten Datenraten, kann die Datenrate noch einmal verdoppelt werden, indem das Zwischenfrequenzsignal über zwei ASI-Schnittstellen, entsprechend der Ausführung gemäß des ersten Ausführungsbeispiels, übermittelt werden.

Das eingelesene digitale Zwischenfrequenzsignal wird in einem Digital/Analog Wandler 37 in ein analoges Zwischenfrequenzsignal umgewandelt. Das analoge Zwischenfrequenzsignal wird, wie in dem Steuersender 3 des ersten Ausführungsbeispiels, in der Korrekturvorrichtung 26 weiterverarbeitet.

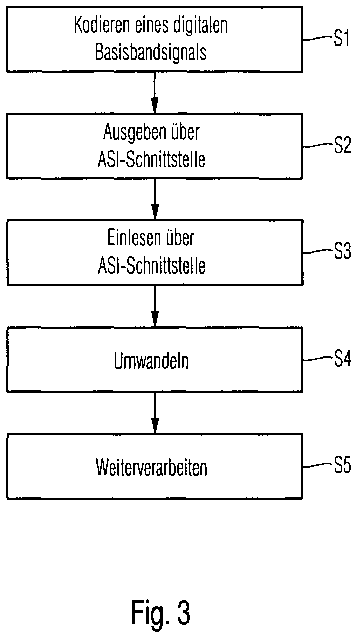

Fig. 3 zeigt ein Flussdiagramm mit den Schritten des erfindungsgemäßen Verfahrens zum externen Kodieren eines digitalen Datenstroms. Da das Verfahren bereits in Zusammenhang mit den ersten beiden Ausführungsbeispielen beschrieben wurde, werden hier nur noch einmal die wichtigsten Schritte beschrieben.

In einem ersten Schritt S1 wird in einem Kodiermodul 15 oder 33 der Kodiervorrichtung 2 oder 32 ein MPEG-2 TS als digitaler Datenstrom in ein digitales Basisbandsignal oder ein digitales Zwischenfrequenzsignal des DVB-T2 Standards kodiert. Dieses digitale Signal wird in das digitale Format der ASI-Schnittstelle 4 und/oder 5 gebracht und in einem zweiten Schritt S2 über diese ASI-Schnittstelle 4 und/oder 5 an den Steuersender 3 oder 36 übermittelt. In einem dritten Schritt S3 wird das digitale Basisbandsignal oder das digitale Zwischenfrequenzsignal aus dem empfangenen Signal ausgelesen. In einem vierten Schritt S4 wird das digitale Basisbandsignal oder das digitale Zwischenfrequenzsignal in einem Digital/Analog-Wandler 21, 22 oder 37 in ein analoges Basisbandsignal oder Zwischenfrequenzsignal des DVB-T2 Standards umgewandelt und in einem fünften Schritt S5 in einer Korrekturvorrichtung 26 zu einem Rundfunksignal nach dem DVB-T2 Standard weiterverarbeitet.

Als Alternative zu einem MPEG-2 Transportstrom kann jeder Datenstrom wie zum Beispiel ein Musikdatenstrom verwendet werden. Das Kodiermodul 15 ist vorzugsweise ein Chip oder Chipsatz, kann aber alternativ auch aus einer Mehrzahl an Einzelvorrichtungen bestehen.

Die Erfindung ist an dem Beispiel eines Rundfunksendesystems des DVB-T2 Standards beschrieben. Die Erfindung ist nicht auf die beschriebenen Ausführungsbeispiele beschränkt. Vielmehr kann die Erfindung auch auf Sendesysteme von Satelliten- und Kabel-gestützten Systemen, wie in DVB-S und DVB-C angewandt werden. Außerdem ist die Erfindung grundsätzlich auf alle Sendesysteme aller Rundfunkstandards anwendbar.

Die Erfindung ist auch auf sonstige Datenübertragungssysteme anwendbar. Die Erfindung ist nicht auf die beschriebenen Ausführungsbeispiele beschränkt. Vielmehr können alle Aspekte der Ausführungsbeispiele vorteilhaft kombiniert werden.

## Patentansprüche

1. Kodiervorrichtung zur Umwandlung eines digitalen Datenstroms in ein digitales Basisbandsignal im Zeitbereich oder in ein digitales Zwischenfrequenzsignal im Zeitbereich;
**dadurch gekennzeichnet,**
**dass** die Kodiervorrichtung (2, 32) wenigstens eine asynchrone serielle Schnittstelle (4, 5) zum Ausgeben des digitalen Basisbandsignals oder des digitalen Zwischenfrequenzsignals im Zeitbereich, aufweist
eine Ausgabevorrichtung (16, 34) verbunden mit der asynchronen seriellen Schnittstelle (4, 5) zum Umwandeln des digitalen Basisbandsignals oder digitalen Zwischenfrequenzsignals in das Übertragungsformat der asynchronen seriellen Schnittstelle (4, 5), und
eine Synchronisierungseinheit (17) zur Erzeugung eines Taktsignals aufweist, die mit der Ausgabevorrichtung (16, 34) und einer Synchronisierungsschnittstelle (10) zur Ausgabe des Taktsignals verbunden ist; und
**dass** die Kodiervorrichtung zumindest eine weitere asynchrone serielle Schnittstelle (5, 4) aufweist, und eine Sinuskomponente des digitalen Basisbandsignals als erstes digitales Signal und eine Cosinuskomponente des digitalen Basisbandsignals als zweites digitales Signal über verschiedene asynchrone serielle Schnittstellen (4, 5) ausgegeben werden,
wobei die asynchronen seriellen Schnittstellen (4, 5) Schnittstellen entsprechend der europäischen Norm EN-500083-9 sind.

2. Kodiervorrichtung nach Anspruch 1,
**dadurch gekennzeichnet,**
**dass** das digitale Basisbandsignal oder das digitale Zwischenfrequenzsignal aus einer Reihe zeitlich aufeinanderfolgender diskreter Datenpunkte besteht,
wobei die Datenpunkte des digitalen Basisbandsignals oder Zwischenfrequenzsignals in der Ausgabevorrichtung (16, 34) auf wenigstens zwei Übertragungsblöcke des Übertragungsformats der asynchronen seriellen Schnittstellen (4, 5) auf Basis eines Aufteilungsmusters aufgeteilt werden und das Aufteilungsmuster mit dem umgewandelten digitalen Basisbandsignal oder digitalen Zwischenfrequenzsignal ausgegeben wird, wenn die Datengröße eines Datenpunkts größer als die Datengröße eines einzelnen Übertragungsblocks ist.

3. Kodiervorrichtung nach einem der Ansprüche 1 bis 2,
**dadurch gekennzeichnet,**
**dass** eine asynchrone serielle Eingangsschnittstelle (13, 14) zum Einlesen des digitalen Datenstroms vorgesehen ist, wobei die asynchrone serielle Eingangsschnittstelle (13, 14) mit der asynchronen seriellen Schnittstelle (4, 5) direkt verbindbar ist.

4. Vorrichtung (3, 36) zur Weiterverarbeitung eines digitalen Basisbandsignals im Zeitbereich oder eines digitalen Zwischenfrequenzsignals im Zeitbereich;
**dadurch gekennzeichnet,**
**dass** die Vorrichtung eine asynchrone serielle Schnittstelle (6, 7) zum Einlesen des digitalen Basisbandsignals,
eine Einlesevorrichtung (19, 35), die mit der asynchronen seriellen Schnittstelle (6, 7) zum Umwandeln eines in dem Übertragungsformat der asynchronen seriellen Schnittstelle (6, 7) vorliegenden eingelesenen Signals in das digitale Basisbandsignal oder das digitale Zwischenfrequenzsignal verbunden ist, und
eine Synchronisierungsschnittstelle (12) zum Einlesen eines Taktsignals, die mit der Einlesevorrichtung (19, 35) verbunden ist, aufweist; und
**dass** die Vorrichtung zumindest eine weitere asynchrone serielle Schnittstelle (7, 6) aufweist, wobei eine Sinuskomponente des digitalen Basisbandsignals als erstes digitales Signal und eine Cosinuskomponente des digitalen Basisbandsignals als zweites digitales Signal über verschiedene asynchrone serielle Schnittstellen (6, 7) eingelesen werden,
wobei die asynchronen seriellen Schnittstellen (4, 5, 7, 6) Schnittstellen entsprechend der europäischen Norm EN-500083-9 sind.

5. Vorrichtung nach Anspruch 4,
**dadurch gekennzeichnet,**
**dass** das digitale Basisbandsignal oder das digitale Zwischenfrequenzsignal aus einer Reihe zeitlich aufeinanderfolgender diskreter Datenpunkte besteht,
wobei jeder Datenpunkt des digitalen Basisbandsignals oder Zwischenfrequenzsignals in der Einlesevorrichtung (19, 35) aus in dem Übertragungsformat der asynchronen seriellen Schnittstellen definierten Übertragungsblöcken auf der Basis eines mit dem digitalen Basisbandsignal oder Zwischenfrequenzsignal eingelesenen Aufteilungsmusters ermittelt wird, wenn die Datengröße eines Datenpunkts größer als die Datengröße eines Übertragungsblocks ist.

6. Vorrichtung nach einem der Ansprüche 4 bis 5,
**dadurch gekennzeichnet,**
**dass** die Vorrichtung einen Digital/Analog-Wandler (21, 22; 37) zum Umwandeln des digitalen Basisbandsignals in ein analoges Basisbandsignal oder zum Umwandeln des digitalen Zwischenfrequenzsignals in ein analoges Zwischenfrequenzsignal aufweist.

7. Vorrichtung nach Anspruch 6,
**dadurch gekennzeichnet,**
**dass** die Vorrichtung ein Kodiermodul (30) zur Umwandlung eines digitalen Datenstroms in ein digitales Basisbandsignal im Zeitbereich oder in ein digitales Zwischenfrequenzsignal im Zeitbereich aufweist, wobei das Kodiermodul (30) zwischen die asynchronen seriellen Schnittstellen (6, 7) und den Digital/Analog Wandler (21, 22) schaltbar ist.

8. System, aufweisend
eine Kodiervorrichtung (2, 32) nach einem der Ansprüche 1 bis 3 und
eine Vorrichtung (3, 36) nach einem der Ansprüche 4 bis 7,
wobei die asynchrone serielle Schnittstelle (4, 5) der Kodiervorrichtung (2, 32) mit der asynchronen Schnittstelle (6, 7) der Vorrichtung (3, 36), und
die weitere asynchrone serielle Schnittstelle (5, 4) der Kodiervorrichtung (2, 32) mit der weiteren asynchronen Schnittstelle (7, 6) der Vorrichtung (3, 36) verbunden ist.

9. Verfahren zum externen digitalen Kodieren eines Basisbandsignals oder Zwischenfrequenzsignals, das Verfahren die folgenden Schritte aufweisend:
- Umwandeln (S1) eines digitalen Datenstroms in ein digitales Basisbandsignal im Zeitbereich oder in ein digitales Zwischenfrequenzsignal im Zeitbereich in einer Kodiervorrichtung (2, 32);
- Ausgeben (S2) des digitalen Basisbandsignals oder Zwischenfrequenzsignals über eine asynchrone serielle Schnittstelle (4, 5) der Kodiervorrichtung (2, 32);
**dadurch gekennzeichnet**
**dass** das Verfahren die Schritte aufweist:
- Einlesen (S3) des ausgegebenen digitalen Basisbandsignals an einer mit der asynchronen seriellen Schnittstelle (4, 5) der Kodiervorrichtung (2, 32) verbundenen asynchronen seriellen Schnittstelle (6, 7) einer Vorrichtung (3, 36);
- Weiterverarbeiten (S5) des eingelesenen digitalen Basisbandsignals oder Zwischenfrequenzsignals;
- Umwandeln des digitalen Basisbandsignals oder digitalen Zwischenfrequenzsignals in das Übertragungsformat der asynchronen seriellen Schnittstelle (4, 5) in einer Ausgabevorrichtung (16, 34) verbunden mit der asynchronen seriellen Schnittstelle (4, 5), und
- Erzeugen eines Taktsignals mittels einer Synchronisierungseinheit, die mit der Ausgabevorrichtung (34) und einer Synchronisierungsschnittstelle (10) zur Ausgabe des Taktsignals verbunden ist; und wobei die Kodiervorrichtung (2, 32) zumindest eine weitere asynchrone serielle Schnittstelle (5, 4) aufweist, und eine Sinuskomponente des digitalen Basisbandsignals als erstes digitales Signal und eine Cosinuskomponente des digitalen Basisbandsignals als zweites digitales Signal über verschiedene asynchrone serielle Schnittstellen (4, 5) ausgegeben werden wobei die Vorrichtung (3, 36) zumindest eine weitere asynchrone serielle Schnittstelle (7, 6) aufweist, wobei eine Sinuskomponente des digitalen Basisbandsignals als erstes digitales Signal und eine Cosinuskomponente des digitalen Basisbandsignals als zweites digitales Signal über verschiedene asynchrone serielle Schnittstellen (6, 7) eingelesen werden,
wobei die asynchronen seriellen Schnittstellen (4, 5, 7, 6) Schnittstellen entsprechend der europäischen Norm EN-500083-9 sind.

## Claims

1. Coding device for converting a digital data stream into a digital baseband signal in the time domain or into a digital intermediate frequency signal in the time domain;
**characterized in that**
the coding device (2, 32) has at least one asynchronous serial interface (4, 5) for outputting the digital baseband signal or the digital intermediate frequency signal in the time domain,
has an output device (16, 34) connected to the asynchronous serial interface (4, 5) for converting the digital baseband signal or digital intermediate frequency signal into the transmission format of the asynchronous serial interface (4, 5), and a synchronization unit (17) for generating a clock signal and that is connected to the output device (16, 34) and a synchronization interface (10) for outputting the clock signal; and
**in that** the coding device has at least one further asynchronous serial interface (5, 4), and a sine component of the digital baseband signal is output as first digital signal and a cosine component of the digital baseband signal is output as second digital signal via different asynchronous serial interfaces (4, 5),
wherein the asynchronous serial interfaces (4, 5) are interfaces in accordance with the EN-500083-9 European standard.

2. Coding device according to Claim 1,
**characterized in that**
the digital baseband signal or the digital intermediate frequency signal consists of a series of temporally consecutive discrete data points,
wherein the data points of the digital baseband signal or intermediate frequency signal are divided in the output device (16, 34) into at least two transmission blocks in the transmission format of the asynchronous serial interfaces (4, 5) on the basis of a division pattern, and the division pattern is output with the converted digital baseband signal or digital intermediate frequency signal if the data size of a data point is greater than the data size of an individual transmission block.

3. Coding device according to either of Claims 1 and 2,
**characterized in that**
an asynchronous serial input interface (13, 14) is provided for reading in the digital data stream, wherein the asynchronous serial input interface (13, 14) is able to be connected directly to the asynchronous serial interface (4, 5).

4. Device (3, 36) for processing a digital baseband signal in the time domain or a digital intermediate frequency signal in the time domain;
**characterized in that**
the device has an asynchronous serial interface (6, 7) for reading in the digital baseband signal,
a reading-in device (19, 35) that is connected to the asynchronous serial interface (6, 7) for converting a read-in signal present in the transmission format of the asynchronous serial interface (6, 7) into the digital baseband signal or the digital intermediate frequency signal, and
a synchronization interface (12) for reading in a clock signal and that is connected to the reading-in device (19, 35); and
**in that** the device has at least one further asynchronous serial interface (7, 6), wherein a sine component of the digital baseband signal is read in as first digital signal and a cosine component of the digital baseband signal is read in as second digital signal via different asynchronous serial interfaces (6, 7),
wherein the asynchronous serial interfaces (4, 5, 7, 6) are interfaces in accordance with the EN-500083-9 European standard.

5. Device according to Claim 4,
**characterized in that**
the digital baseband signal or the digital intermediate frequency signal consists of a series of temporally consecutive discrete data points,
wherein each data point of the digital baseband signal or intermediate frequency signal is determined in the reading-in device (19, 35) from transmission blocks defined in the transmission format of the asynchronous serial interfaces on the basis of a division pattern read in with the digital baseband signal or intermediate frequency signal if the data size of a data point is greater than the data size of a transmission block.

6. Device according to either of Claims 4 and 5,
**characterized in that**
the device has a digital-to-analogue converter (21, 22; 37) for converting the digital baseband signal into an analogue baseband signal or for converting the digital intermediate frequency signal into an analogue intermediate frequency signal.

7. Device according to Claim 6,
**characterized in that**
the device has a coding module (30) for converting a digital data stream into a digital baseband signal in the time domain or into a digital intermediate frequency signal in the time domain, wherein the coding module (30) is able to be switched between the asynchronous serial interfaces (6, 7) and the digital-to-analogue converters (21, 22).

8. System, having
a coding device (2, 32) according to one of Claims 1 to 3 and
a device (3, 36) according to one of Claims 4 to 7, wherein the asynchronous serial interface (4, 5) of the coding device (2, 32) is connected to the asynchronous interface (6, 7) of the device (3, 36), and
the further asynchronous serial interface (5, 4) of the coding device (2, 32) is connected to the further asynchronous interface (7, 6) of the device (3, 36).

9. Method for the external digital coding of a baseband signal or intermediate frequency signal, the method having the following steps:
- converting (S1) a digital data stream into a digital baseband signal in the time domain or into a digital intermediate frequency signal in the time domain in a coding device (2, 32);
- outputting (S2) the digital baseband signal or intermediate frequency signal via an asynchronous serial interface (4, 5) of the coding device (2, 32);
**characterized in that**
the method has the following steps:
- reading in (S3) the output digital baseband signal at an asynchronous serial interface (6, 7) of a device (3, 36), connected to an asynchronous serial interface (4, 5) of the coding device (2, 32);
- processing (S5) the read-in digital baseband signal or intermediate frequency signal;
- converting the digital baseband signal or digital intermediate frequency signal into the transmission format of the asynchronous serial interface (4, 5) in an output device (16, 34) connected to the asynchronous serial interface (4, 5), and
- generating a clock signal by way of a synchronization unit that is connected to the output device (34) and to a synchronization interface (10) for outputting the clock signal; and wherein
the coding device (2, 32) has at least one further asynchronous serial interface (5, 4), and a sine component of the digital baseband signal is output as first digital signal and a cosine component of the digital baseband signal is output as second digital signal via different asynchronous serial interfaces (4, 5),
wherein the device (3, 36) has at least one further asynchronous serial interface (7, 6), wherein a sine component of the digital baseband signal is read in as first digital signal and a cosine component of the digital baseband signal is read in as second digital signal via different asynchronous serial interfaces (6, 7),
wherein the asynchronous serial interfaces (4, 5, 7, 6) are interfaces in accordance with the EN-500083-9 European standard.

## Revendications

1. Dispositif de codage pour la conversion d'un flux de données numériques en un signal de bande de base numérique dans le domaine temporel ou en un signal de fréquence intermédiaire numérique dans le domaine temporel ;
**caractérisé en ce**
**que** le dispositif de codage (2, 32) présente au moins une interface sérielle asynchrone (4, 5) pour l'émission du signal de bande de base numérique ou du signal de fréquence intermédiaire numérique dans le domaine temporel,
un dispositif d'émission (16, 34) relié à l'interface sérielle asynchrone (4, 5) pour la conversion du signal de bande de base numérique ou signal de fréquence intermédiaire numérique dans le format de transmission de l'interface sérielle asynchrone (4, 5) et
une unité de synchronisation (17) pour la génération d'un signal d'horloge, qui est reliée au dispositif d'émission (16, 34) et à une interface de synchronisation (10) pour l'émission du signal d'horloge ; et
**que** le dispositif de codage présente au moins une autre interface sérielle asynchrone (5, 4), et une composante sinusoïdale du signal de bande de base numérique en tant que premier signal numérique et une composante cosinusoïdale du signal de bande de base numérique en tant que deuxième signal numérique sont émises par l'intermédiaire de différentes interfaces sérielles asynchrones (4, 5),
dans lequel les interfaces sérielles asynchrones (4, 5) sont des interfaces correspondant à la norme européenne EN-500083-9.

2. Dispositif de codage selon la revendication 1,
**caractérisé en ce**
**que** le signal de bande de base numérique ou le signal de fréquence intermédiaire numérique est constitué d'une série de points de données discrets se succédant dans le temps,
dans lequel les points de données du signal de bande de base ou signal de fréquence intermédiaire numérique dans le dispositif d'émission (16, 34) sont répartis sur au moins deux blocs de transmission du format de transmission des interfaces sérielles asynchrones (4, 5) sur la base d'un modèle de répartition et le modèle de répartition est émis avec le signal de bande de base numérique ou signal de fréquence intermédiaire numérique converti, lorsque la grandeur de données d'un point de données est plus grande que la grandeur de données d'un bloc de transmission individuel.

3. Dispositif de codage selon l'une quelconque des revendications 1 à 2,
**caractérisé en ce**
**qu'**une interface d'entrée sérielle asynchrone (13, 14) pour la lecture du flux de données numériques est prévue, dans lequel l'interface d'entrée sérielle asynchrone (13, 14) peut être reliée directement à l'interface sérielle asynchrone (4, 5).

4. Dispositif (3, 36) pour le retraitement d'un signal de bande de base numérique dans le domaine temporel ou d'un signal de fréquence intermédiaire numérique dans le domaine temporel ;
**caractérisé en ce**
**que** le dispositif présente une interface sérielle asynchrone (6, 7) pour la lecture du signal de bande de base numérique,
un dispositif de lecture (19, 35), qui est relié à l'interface sérielle asynchrone (6, 7) pour la conversion d'un signal lu présent dans le format de transmission de l'interface sérielle asynchrone (6, 7) dans le signal de bande de base numérique ou le signal de fréquence intermédiaire numérique, et
une interface de synchronisation (12) pour lire un signal d'horloge, qui est reliée au dispositif de lecture (19, 35) ; et
**que** le dispositif présente au moins une autre interface sérielle asynchrone (7, 6), dans lequel une composante sinusoïdale du signal de bande de base numérique en tant que premier signal numérique et une composante cosinusoïdale du signal de bande de base numérique en tant que deuxième signal numérique sont lues par l'intermédiaire de différentes interfaces sérielles asynchrones (6, 7),
dans lequel les interfaces sérielles asynchrones (4, 5, 7, 6) sont des interfaces correspondant à la norme européenne EN-500083-9.

5. Dispositif selon la revendication 4,
**caractérisé en ce**
**que** le signal de bande de base numérique ou le signal de fréquence intermédiaire numérique est constitué d'une série de points de données discrets se succédant dans le temps,
dans lequel chaque point de données du signal de bande de base ou signal de fréquence intermédiaire numérique dans le dispositif de lecture (19, 35) est déterminé à partir de blocs de transmission définis dans le format de transmission des interfaces sérielles asynchrones sur la base d'un modèle de répartition lu avec le signal de bande de base ou signal de fréquence intermédiaire numérique, lorsque la grandeur de données d'un point de données est plus grande que la grandeur de données d'un bloc de transmission.

6. Dispositif selon l'une quelconque des revendications 4 à 5,
**caractérisé en ce**
**que** le dispositif présente un convertisseur numérique/analogique (21, 22 ; 37) pour la conversion du signal de bande de base numérique en un signal de bande de base analogique ou la conversion du signal de fréquence intermédiaire numérique en un signal de fréquence intermédiaire analogique.

7. Dispositif selon la revendication 6,
**caractérisé en ce**
**que** le dispositif présente un module de codage (30) pour la conversion d'un flux de données numériques en un signal de bande de base numérique dans le domaine temporel ou en un signal de fréquence intermédiaire numérique dans le domaine temporel, dans lequel le module de codage (30) peut être commuté entre les interfaces sérielles asynchrones (6, 7) et le convertisseur numérique/analogique (21, 22).

8. Système, présentant
un dispositif de codage (2, 32) selon l'une quelconque des revendications 1 à 3 et
un dispositif (3, 36) selon l'une quelconque des revendications 4 à 7,
dans lequel l'interface sérielle asynchrone (4, 5) du dispositif de codage (2, 32) est reliée à l'interface sérielle asynchrone (6, 7) du dispositif (3, 36), et
l'autre interface sérielle asynchrone (5, 4) du dispositif de codage (2, 32) est reliée à l'autre interface asynchrone (7, 6) du dispositif (3, 36).

9. Procédé pour le codage numérique externe d'un signal de bande de base ou signal de fréquence intermédiaire, le procédé présentant les étapes suivantes :
- la conversion (S1) d'un flux de données numériques en un signal de bande de base numérique dans le domaine temporel ou en un signal de fréquence intermédiaire numérique dans le domaine temporel dans un dispositif de codage (2, 32) ;
- l'émission (S2) du signal de bande de base ou signal de fréquence intermédiaire numérique par l'intermédiaire d'une interface sérielle asynchrone (4, 5) du dispositif de codage (2, 32) ;
**caractérisé en ce**
**que** le procédé présente les étapes :
- de lecture (S3) du signal de bande de base numérique émis sur une interface sérielle asynchrone (6, 7), reliée à l'interface sérielle asynchrone (4, 5) du dispositif de codage (2, 32), d'un dispositif (3, 36) ;
- le retraitement (S5) du signal de bande de base ou signal de fréquence intermédiaire numérique lu ;
- la conversion du signal de bande de base numérique ou signal de fréquence intermédiaire numérique dans le format de transmission de l'interface sérielle asynchrone (4, 5) dans un dispositif d'émission (16, 34) relié à l'interface sérielle asynchrone (4, 5), et
- la génération d'un signal d'horloge au moyen d'une unité de synchronisation, qui est reliée au dispositif d'émission (34) et à une interface de synchronisation (10) pour l'émission du signal d'horloge ; et
dans lequel
le dispositif de codage (2, 32) présente au moins une autre interface sérielle asynchrone (5, 4), et une composante sinusoïdale du signal de bande de base numérique en tant que premier signal numérique et une composante cosinusoïdale du signal de bande de base numérique en tant que deuxième signal numérique sont émises par l'intermédiaire de différentes interfaces sérielles asynchrones (4, 5),
dans lequel le dispositif (3, 36) présente au moins une autre interface sérielle asynchrone (7, 6), dans lequel une composante sinusoïdale du signal de bande de base numérique en tant que premier signal numérique et une composante cosinusoïdale du signal de bande de base numérique en tant que deuxième signal numérique sont lues par l'intermédiaire de différentes interfaces sérielles asynchrones (6, 7),
dans lequel les interfaces sérielles asynchrones (4, 5, 7, 6) sont des interfaces correspondant à la norme européenne EN-500083-9.
